(19) Europäisches Patentamt
European Patent Office
Office européen des brevets

(11) **EP 3 509 894 B1**

(12) **EUROPÄISCHE PATENTSCHRIFT**

(45) Veröffentlichungstag und Bekanntmachung des Hinweises auf die Patenterteilung:
**12.10.2022  Patentblatt 2022/41**

(21) Anmeldenummer: **17754303.0**

(22) Anmeldetag: **03.08.2017**

(51) Internationale Patentklassifikation (IPC):
***B60L 53/122*** *(2019.01)*      ***B60L 53/124*** *(2019.01)*
***H02J 50/60*** *(2016.01)*

(52) Gemeinsame Patentklassifikation (CPC):
**H02J 50/60; B60L 53/122; B60L 53/124; H02J 50/12;** Y02T 10/70; Y02T 10/7072; Y02T 90/12; Y02T 90/14

(86) Internationale Anmeldenummer:
**PCT/EP2017/069607**

(87) Internationale Veröffentlichungsnummer:
**WO 2018/046199 (15.03.2018 Gazette 2018/11)**

(54) **LADESTATION, KRAFTFAHRZEUG UND VERFAHREN ZUM INDUKTIVEN LADEN EINER BATTERIE EINES KRAFTFAHRZEUGS**

CHARGING STATION, MOTOR VEHICLE AND METHOD FOR INDUCTIVE CHARGING OF A BATTERY OF A MOTOR VEHICLE

STATION DE CHARGE, VÉHICULE AUTOMOBILE ET PROCÉDÉ DE CHARGE PAR INDUCTION D'UNE BATTERIE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2016   DE 102016216939**

(43) Veröffentlichungstag der Anmeldung:
**17.07.2019   Patentblatt 2019/29**

(73) Patentinhaber: **Audi AG**
**85045 Ingolstadt (DE)**

(72) Erfinder:
• **MAIWALD, Stefan**
  **85055 Ingolstadt (DE)**
• **SCHNEIDER, Johann**
  **85139 Wettstetten (DE)**

(56) Entgegenhaltungen:
**DE-A1-102011 050 655      DE-A1-102012 218 194
US-A1- 2016 218 567**

EP 3 509 894 B1

**Beschreibung**

Die vorliegende Erfindung betrifft ein Kraftfahrzeug mit einer Ladevorrichtung zum induktiven Laden einer Batterie des Kraftfahrzeugs, wobei das Kraftfahrzeug einen Sekundärschwingkreis mit einem Sekundärkondensator und einer Sekundärspule aufweist, wobei zwischen den Sekundärschwingkreis und die Batterie des Kraftfahrzeugs ein Gleichrichter geschaltet ist. Sie betrifft weiterhin ein System zum induktiven Laden umfassend eine Ladestation sowie ein derartiges Kraftfahrzeug. Schließlich betrifft die Erfindung ein Verfahren zum induktiven Laden einer Batterie eines Kraftfahrzeugs mittels einer Ladestation, die einen Primärschwingkreis mit einem Primärkondensator und einer Primärspule zum Erzeugen einer elektrischen Schwingung aufweist, wobei das Kraftfahrzeug einen Sekundärschwingkreis mit einem Sekundärkondensator und einer Sekundärspule aufweist, wobei zwischen den Sekundärschwingkreis und die Batterie des Kraftfahrzeugs ein Gleichrichter geschaltet ist.

Bei Elektrofahrzeugen ist es bevorzugt, die Batterien des Kraftfahrzeugs über induktives Laden, d.h. ohne Steckverbindung, laden zu können. Zur effizienten induktiven Übertragung von Energie werden hohe Ströme mit relativ hohen Frequenzen verwendet. Die Frequenzen liegen typischerweise im Bereich zwischen 50 kHz und 100 kHz.

Zum Laden wird ein großes externes Ladegerät mit einer Spule an das Fahrzeug herangeführt oder umgekehrt das Fahrzeug zu dem externen Ladegerät bewegt. Das Fahrzeug weist seinerseits eine Sekundärspule nahe an der Oberfläche des Kraftfahrzeugs auf, sodass über Induktion der Ladestrom von der primärseitigen Spule des Ladegeräts auf die sekundärseitige Spule des Kraftfahrzeugs übertragen werden kann. Dabei darf sich kein ferritischer Gegenstand oder auch nur leitende Metalle zwischen den Induktionsspulen befinden, da über das starke Magnetwechselfeld entweder Eisenverluste in ferritischen Materialien oder Wirbelströme in leitenden Gegenständen, beispielsweise Alufolie, Münzen, Scheiben, Drähten, Nägeln etc., entstehen und sich so wegen der starken Verlustleistung extrem erhitzen können. Dadurch können Schäden an der Ladevorrichtung, schlimmstenfalls auch Brände, verursacht werden.

Die vorliegende Erfindung betrifft grundsätzlich das Problem, wie derartige Schäden bzw. eine Brandgefahr vermieden werden können.

Die DE 10 2014 207 253 A1, die zur Formulierung der Oberbegriffe der unabhängigen Ansprüche herangezogen wurde, betrifft eine Vorrichtung und ein Verfahren zum Überprüfen eines Vorhandenseins eines elektrisch leitfähigen Körpers beim induktiven Laden. Dabei muss verhindert werden, dass in den großen Luftspalt zwischen der Primärspule und der Sekundärspule elektrisch leitfähige Körper gelangen können. Infolge der Einwirkung des Ladefelds in dem Luftspalt kann nämlich der elektrisch leitfähige Körper erhitzt werden. Im schlimmsten Fall könnte es beispielsweise bei metallbeschichteten Kunststoffen oder bei metallbeschichteten Papieren zu einer Selbstentzündung des Körpers kommen. Die Vorrichtung umfasst eine Sendeeinrichtung, mit der ein Sendesignal in Form eines magnetischen Felds ausgesendet werden kann. Des Weiteren umfasst die Vorrichtung eine Empfangseinrichtung, die das Sendesignal oder Teile davon empfangen kann. Insbesondere kann das Empfangssignal durch den elektrisch leitfähigen Körper beeinflusst werden. Diese Beeinflussung bzw. Veränderung des magnetischen Felds kann von der Empfangseinrichtung erfasst werden. Somit lässt sich durch die Lehre der genannten Druckschrift ein elektrisch leitfähiger Körper durch Erfassen einer Veränderung eines magnetischen Felds detektieren.

Aus der DE 10 2014 223 623 A1 ist eine Vorrichtung und ein Verfahren zum Betreiben eines Induktivladevorgangs eines Fahrzeugs bekannt. Um einen metallischen Fremdkörper zwischen den ladestationsseitigen Erregerspulen und den fahrzeugseitigen Induktionsspulen zu erfassen, wird eine Temperaturänderung erfasst, die sich bei Induktion von Wirbelströmen in dem metallischen Fremdkörper ergibt.

Aus der EP 2 891 575 A1 ist ein Übertragerelement für ein System zur induktiven Energieübertragung für ein Fahrzeug bekannt. Zur Detektion von Gegenständen aller Art und insbesondere auch von Lebewesen und Tieren auf der Ladestation wird, analog zu einem Touch-Bedienfeld, eine zusätzliche Kapazitivsensorik aufgebracht. Dieses Verfahren basiert auf der Messung der Entladezeit oder einer Resonanzfrequenzverstimmung mittels dieser Kapazitivsensorik. Dabei wird ausgenutzt, dass zwischen verschiedenen Bereichen der Primärspule Kapazitäten existieren. Die Größen dieser Kapazitäten verändern sich bei Annäherung eines lebenden Objekts oder Fremdkörpers, sodass der aktuelle, über eine Messanordnung ermittelbare Wert die Detektierung der Anwesenheit eines lebenden Körpers oder eines Fremdkörpers ermöglicht. Ausgewertet wird der aktuelle Wert der jeweiligen Kapazität. Die Kapazitätsveränderung wird dadurch ausgewertet, dass die zu messende Kapazität Teil eines Schwingkreises ist und die Resonanzfrequenz dieses Schwingkreises gemessen wird.

Die DE 10 2011 050 655 A1 betrifft ein Verfahren zur Erkennung eines elektrisch leitfähigen Fremdkörpers an einer Vorrichtung zur induktiven Übertragung elektrischer Energie von einer stationären Einheit mit einer Stromversorgungseinheit und einer Primärinduktivität zu einer mobilen Einheit mit einer Sekundärinduktivität und einem elektrischen Verbraucher, bei dem zunächst elektrische Leistung aus der Stromversorgungseinheit in die Primärinduktivität eingespeist und anschließend diese Einspeisung unterbrochen wird. Der zeitliche Verlauf des dadurch verursachten Abklingens einer elektrischen Betriebsgröße der Primärinduktivität wird gemessen und mindestens ein Parameter des gemessenen Verlaufs mit einem entsprechenden Parameter eines Referenzverlaufs, der bei einer Unterbrechung der Leistungseinspeisung in die Primärinduktivität ohne Vorhandensein eines elektrisch leitfähigen Fremdkörpers im Bereich des von der Primärinduktivität erzeugten Magnetfelds ermittelt wurde, verglichen. Anhand dieses Vergleichs wird festgestellt, ob ein elektrisch leitfähiger Fremdkörper im Bereich des von der Primärinduktivität erzeugten Magnetfelds vorhanden ist. Diese Druckschrift wurde zur Formulierung des Oberbegriffs von Patentanspruch 1 herangezogen.

Die DE 10 2012 218 194 A1 betrifft ein Verfahren zum Betreiben einer drahtlosen Energieübertragungsanordnung mit einem Primärglied und einem Sekundärglied, die induktiv koppelbar sind, um elektrische Energie von dem Primärglied auf das Sekundärglied zu übertragen. Dabei weist das Primärglied zwei Eingangsklemmen zum Anschließen einer elektrischen Energiequelle auf, die mit einer elektrischen Kapazität elektrisch gekoppelt sind, wobei zunächst eine elektrische Schwingung eines Resonanzkreises, der durch die elektrische Kapazität und eine Induktivität des Primärglieds gebildet ist, angeregt wird. Wenigstens eine elektrische Größe der elektrischen Schwingung des Resonanzkreises wird erfasst und ein Objekt in einem Luftspalt zwischen dem Primärglied und dem Sekundärglied auf der Grundlage eines Abklingverhaltens der elektrischen Größe erkannt.

Die US 2016/0218567 A1 betrifft ebenfalls ein Verfahren und eine Vorrichtung zum Detektieren der Anwesenheit eines unerwünschten Fremdkörpers in einem Bereich zwischen einem Apparat zur drahtlosen Leistungsübertragung und einem Apparat zur Leistungsentgegennahme.

Die Aufgabe der vorliegenden Erfindung besteht darin, ein eingangs genanntes Kraftfahrzeug, ein eingangs genanntes System sowie ein eingangs genanntes Verfahren zum induktiven Laden derart weiterzubilden, dass bei möglichst geringem Aufwand und damit möglichst geringen Kosten zuverlässig ein ferritischer Gegenstand zwischen der Primär- und der Sekundärspule detektiert werden kann.

Diese Aufgabe wird gelöst durch ein Kraftfahrzeug mit den Merkmalen von Patentanspruch 1, ein System zum induktiven Laden umfassend eine Ladestation und ein Kraftfahrzeug mit den Merkmalen von Patentanspruch 2 sowie durch ein Verfahren mit den Merkmalen von Patentanspruch 7.

Die vorliegende Erfindung basiert auf der Erkenntnis, dass dies besonders günstig hinsichtlich Aufwand und Kosten erfolgen kann, wenn ein ohnehin vorhandenes Signal ausgewertet wird. Wie im Nachfolgenden noch ausführlicher dargelegt werden wird, wird die Spannungsamplitude des jeweiligen Schwingkreises sowohl auf der Primär- als auch auf der Sekundärseite bei einer Unterbrechung und anschließendem Kurzschließen der Anregung des jeweiligen Schwingkreises bei Vorhandensein eines ferritischen Gegenstands zwischen den Induktionsspulen beeinflusst. Wird demnach diese Spannungsamplitude erfasst und ausgewertet, können Rückschlüsse darauf gezogen werden, ob sich zwischen Primär- und Sekundärspule ein ferritischer Gegenstand befindet.

Die Ladevorrichtung des Kraftfahrzeugs umfasst weiterhin eine Messvorrichtung, die ausgelegt ist, nach einer Unterbrechung der Anregung des Sekundärschwingkreises den zeitlichen Verlauf der Spannungsamplitude des Sekundärschwingkreises auszuwerten.

Bei dem erfindungsgemäßen Kraftfahrzeug ist die Messvorrichtung ausgelegt, zu prüfen, ob der Gleichrichter sperrt, wobei die Messvorrichtung weiterhin ausgelegt ist, den zeitlichen Verlauf der Spannungsamplitude des Sekundärschwingkreises nur dann auszuwerten, wenn der Gleichrichter sperrt. Durch das Sperren des Gleichrichters wird sichergestellt, dass keine Energie aus dem Sekundärschwingkreis auf die zu ladende Batterie übertragen wird. Demnach resultieren Abweichungen der abklingenden Schwingung im Vergleich zu einem Referenzwert alleine von einem sich zwischen Primär- und Sekundärspule befindenden ferritischen Gegenstand.

Die mit Bezug auf das erfindungsgemäße Kraftfahrzeug vorgestellten bevorzugten Ausführungsformen und dessen Vorteile gelten entsprechend, soweit anwendbar, für ein erfindungsgemäßes System zum induktiven Laden umfassend eine Ladestation sowie ein erfindungsgemäßes Kraftfahrzeug. Dieselbe Aussage gilt für das erfindungsgemäße Verfahren.

Bei dem erfindungsgemäßen System umfasst die Ladestation weiterhin eine Messvorrichtung, die ausgelegt ist, den Primärschwingkreis bis zu einer vorgebbaren Spannungsamplitude anzuregen und anschließend die Anregung des Primärschwingkreises zu unterbrechen.

Da die Dämpfung in der Gleichung für die abklingende Schwingung der jeweiligen Spannungsamplitude im Exponenten auftritt, ergeben sich bereits bei einer geringen Modifikation des Dämpfungsgrads signifikante Unterschiede. Damit lässt sich das Vorhandensein ferritischer Gegenstände zwischen Primär- und Sekundärspule bei minimalem Aufwand und minimalen Kosten sehr zuverlässig detektieren.

Besonders bevorzugt ist die Messvorrichtung ausgelegt, in einem ersten Schritt die Anregung des Primärschwingkreises zu unterbrechen und in einem zweiten Schritt den Primärschwingkreis kurzzuschließen. Durch das Kurzschließen des Primärschwingkreises wird ein definierter Anfangszustand geschaffen, der der nachfolgenden Auswertung der abklingenden Schwingung zugrunde gelegt werden kann.

Die Messvorrichtung ist weiterhin bevorzugt ausgelegt, zur Auswertung des zeitlichen Verlaufs der Spannungsamplitude des Primärschwingkreises nach der Unterbrechung der Anregung und dem Kurzschließen des Primärschwingkreises einen vorgebbaren Parameter zu ermitteln, insbesondere die Spannungsamplitude nach einer vorgebbaren Zeit, und/oder die Zeitdauer, bis eine vorgebbare Spannungsamplitude messbar ist, und/oder den Dämpfungsgrad der Spannungsamplituden, insbesondere das Amplitudenverhältnis zweier aufeinander folgender Schwingungen. Dabei müssen nicht zwei unmittelbar aufeinander folgende Schwingungen ausgewertet werden. Je nachdem, wie das Kraftfahrzeug ausgestattet ist, kann der einen oder der anderen Variante der Vorzug gegeben werden.

Ein Referenzwert wird vorab ermittelt, ohne dass sich ein Objekt zwischen der Primärspule und der Sekundärspule befindet. Bei einem derartigen Kalibriervorgang werden Magnetverluste der Gesamtanordnung berücksichtigt. Bevorzugt werden vorab, beispielsweise werkseitig, Referenzwerte für unterschiedliche Kombinationen aus Ladestation und Kraftfahrzeug ermittelt und in der Ladestation bzw. im Kraftfahrzeug abgespeichert und für den genannten Vergleich bereitgestellt.

Es kann auch vorgesehen sein, dass die Referenzwerte nur in der Ladestation bzw. nur im Kraftfahrzeug abgelegt werden und bei Bedarf an das jeweilige Gegenüber übertragen werden.

Die Messvorrichtung ist bevorzugt mit einem Anschluss zwischen dem Primärkondensator und der Primärspule gekoppelt, um die auszuwertende Spannungsamplitude zu erfassen, insbesondere über einen Shunt-Widerstand und/oder einen Spannungsteiler.

In einem bevorzugten Ausführungsbeispiel ist der Primärschwingkreis als Vollbrückenschaltung ausgebildet, wobei die Messvorrichtung ausgelegt ist, die Anregung des Primärschwingkreises zu unterbrechen und die Vollbrückenschaltung kurzzuschließen, insbesondere durch Leitendschalten der beiden tiefliegenden Schalter der Vollbrückenschaltung. Dabei werden die Schalter der Vollbrückenschaltung zum Aufladen des Schwingkreises über Kreuz angesteuert.

Bei dem erfindungsgemäßen Verfahren wird in Schritt a) die vorgebbare Spannungsamplitude derart bemessen, dass der Gleichrichter des Kraftfahrzeugs sperrt. Auf diese Weise wird ebenfalls wieder sichergestellt, dass Abweichungen der jeweils abklingenden Spannungsamplitude vom einem Referenzwert nicht von einem Laden der Fahrzeugbatterie herrühren.

Während bei einer Anregung auf eine vorgebbare Spannungsamplitude, bei der der Gleichrichter des Kraftfahrzeugs sperrt, ein Kurzschließen des Primärschwingkreises nicht unbedingt nötig ist, hat dieses bei einer Anregung des Primärschwingkreises auf seine Soll-Spannung zu erfolgen, da ansonsten die Gefahr besteht, dass die Batterie des Kraftfahrzeugs geladen wird und damit die Messung verfälscht wird.

Da die Anzahl der unterschiedlichen Typen von Ladestationen geringer sein wird als die Anzahl der Typen zu ladender Kraftfahrzeuge, bietet die Auswertung im Kraftfahrzeug den Vorteil, dass dort nur Referenzwerte für die überschaubare Anzahl von Typen von Ladestationen abgespeichert werden müssen.

Weitere bevorzugte Ausführungsformen ergeben sich aus den Unteransprüchen.

Im Nachfolgenden wird nunmehr ein Ausführungsbeispiel der vorliegenden Erfindung unter Bezugnahme auf die beigefügten Zeichnungen näher beschrieben. Diese zeigen:

Fig. 1    in schematischer Darstellung ein Ausführungsbeispiel eines erfindungsgemäßen Systems zum induktiven Laden umfassend eine Ladestation sowie ein erfindungsgemäßes Kraftfahrzeug;

Fig. 2    in schematischer Darstellung eine Schaltungsanordnung eines aus dem Stand der Technik bekannten Schwingkreises;

Fig. 3    eine abklingende Schwingung für den in Fig. 2 dargestellten Schwingkreis bei schwacher Dämpfung $\omega_0 > \beta$;

Fig. 4    die Darstellung von Fig. 3, wobei die Schwingungsamplitude logarithmisch aufgetragen ist;

Fig. 5a    den zeitlichen Verlauf der bei einem erfindungsgemäßen System zum induktiven Laden gemäß Fig. 1 primärseitig am Schwingkreis abgegriffenen Spannung, des Stroms des den Schwingkreis versorgenden Netzteils sowie des Batteriestroms auf der Sekundärseite ohne Fremdkörper zwischen Primär- und Sekundärspule;

Fig. 5b    den zeitlichen Verlauf der bei einem erfindungsgemäßen System zum induktiven Laden gemäß Fig. 1 primärseitig am Schwingkreis abgegriffenen Spannung, des Stroms des den Schwingkreis versorgenden Netzteils sowie des Batteriestroms auf der Sekundärseite mit Fremdkörper zwischen Primär- und Sekundärspule;

Fig. 6a    die zeitlichen Verläufe für das Ausführungsbeispiel von Fig. 5 des primärseitigen Spannungsabgriffs am Schwingkreis sowie eines sekundärseitigen Spannungsabgriffs ohne Fremdkörper zwischen Primär- und Sekundärspule; und

Fig. 6b    die zeitlichen Verläufe für das Ausführungsbeispiel von Fig. 5 des primärseitigen Spannungsabgriffs am Schwingkreis sowie eines sekundärseitigen Spannungsabgriffs mit Fremdkörper zwischen Primär- und Sekundärspule.

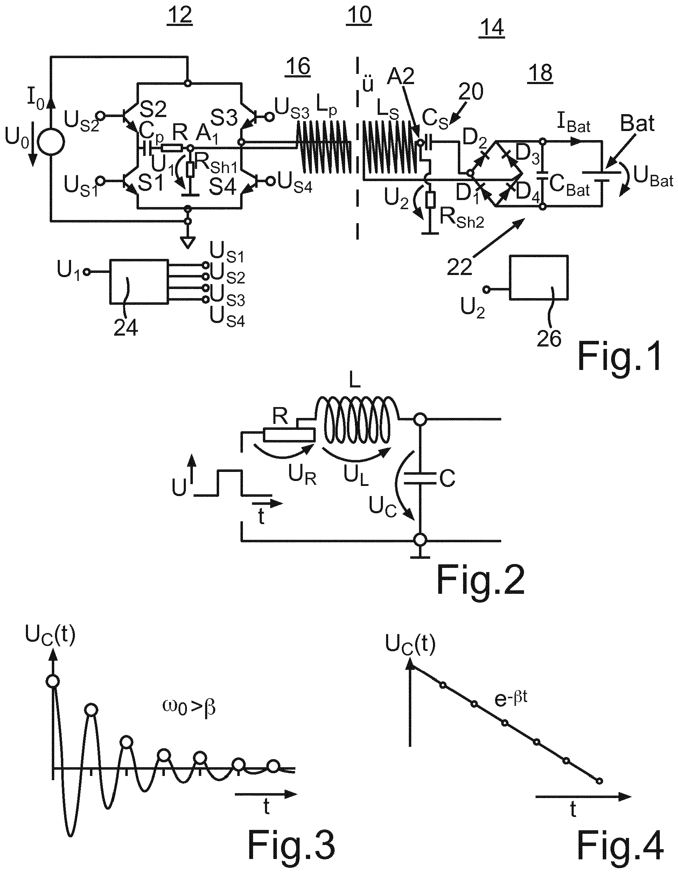

Fig. 1 zeigt in schematischer Darstellung ein erfindungsgemäßes System 10 zum induktiven Laden einer Batterie Bat eines Kraftfahrzeugs 14. Dieses System umfasst eine Ladestation 12, von der in Fig. 1 nur die Teile dargestellt sind, die im Hinblick auf die vorliegende Erfindung von Relevanz sind. Entsprechendes gilt für das erfindungsgemäße Kraftfahrzeug 14.

Die Ladestation 12 umfasst einen elektrischen Schwingkreis 16, der im Ausführungsbeispiel als Vollbrückenschaltung ausgebildet ist und die Schalter S1, S2, S3 und S4 umfasst. Wenngleich diese vorliegend als Bipolartransistoren dargestellt sind, sind diese noch bevorzugter als MOSFET-Transistoren, IG-BTs oder Ähnliches realisiert. Die Steuerelektrode des Schalters S1 wird mit einer Spannung $U_{S1}$ angesteuert, die Steuerelektrode des Schalters S2 mit einer Spannung $U_{S2}$, die Steuerelektrode des Schalters S3 mit einer Spannung $U_{S3}$ und die Steuerelektrode des Schalters S4 mit einer Spannung $U_{S4}$. Zum Laden des Schwingkreises 16 werden die Schalter S1 bis S4, wie dem Fachmann allgemein bekannt, über Kreuz angesteuert. Der Schwingkreis 16 wird versorgt aus einer Spannungsquelle $U_0$, die einen Strom $I_0$ bereitstellt. Bei der Spannungsquelle $U_0$ handelt es sich vorzugsweise um eine gleichgerichtete Netzspannung.

Der Schwingkreis umfasst einen Primärkondensator $C_P$, eine Primärspule $L_P$, einen ohmschen Widerstand R, der zwischen den Primärkondensator $C_P$ und die Primärspule $L_P$ gekoppelt ist, sowie einen Shunt-Widerstand $R_{Sh1}$, der mit einem Abgriffspunkt A1 zwischen den Primärkondensator $C_P$ und die Primärspule $L_P$ gekoppelt ist und an dem eine erste Abgriffsspannung $U_1$ abfällt.

Die Ladestation 12 umfasst weiterhin eine Messvorrichtung 24, die ausgelegt ist, den Primärschwingkreis 16 durch entsprechende Bereitstellung der Spannungen $U_{S1}$, $U_{S2}$, $U_{S3}$ und $U_{S4}$ bis zu einer vorgebbaren Spannungsamplitude anzuregen, anschließend die Anregung des Primärschwingkreises 16 zu unterbrechen und den Primärschwingkreis kurzzuschließen. In einer nicht beanspruchten Ausführungsform ist die Messvorrichtung 24 ausgelegt, den zeitli-chen Verlauf der Spannungsamplitude $U_1$ des Primärschwingkreises 16 nach der Unterbrechung der Anregung des Primärschwingkreises 16 auszuwerten.

Das Kraftfahrzeug 14 umfasst eine Ladevorrichtung 18 zum induktiven Laden der Batterie Bat des Kraftfahrzeugs 14, wobei an der Batterie Bat eine Batteriespannung $U_{Bat}$ abfällt. Die Ladevorrichtung 18 umfasst einen Sekundärschwingkreis 20 mit einem Sekundärkondensator Cs und einer Sekundärspule Ls. Das Übertragungsverhältnis zwischen der Primärspule $L_P$ und der Sekundärspule Ls ist mit ü bezeichnet. Zwischen den Sekundärschwingkreis 20 und die Batterie Bat des Kraftfahrzeugs 14 ist ein Gleichrichter 22 geschaltet, der die Dioden D1, D2, D3 und D4 umfasst. Der Batterie Bat ist ein Kondensator $C_{Bat}$ parallel geschaltet. Die Ladevorrichtung 18 umfasst weiterhin einen Shunt-Widerstand $R_{Sh2}$, der mit einem Abgriffspunkt A2 zwischen die Sekundärspule Ls und den Sekundärkondensator Cs gekoppelt ist und an dem eine Abgriffsspannung $U_2$ abfällt.

Die Ladevorrichtung 18 umfasst weiterhin eine Messvorrichtung 26, die ausgelegt ist, nach einer Erzeugung oder Detektion einer Unterbrechung der Anregung des Sekundärschwingkreises 20 den zeitlichen Verlauf der Span-nungsamplitude $U_2$ des Sekundärschwingkreises 20 auszuwerten.

Wie im Folgenden noch genauer erläutert wird, kann entweder eine Messvorrichtung 24 oder eine Messvorrichtung 26 vorhanden sein, es können jedoch auch beide Messvorrichtungen 24, 26 vorgesehen werden.

Generell erfolgt das Laden der Batterie Bat derart, dass der Primärschwingkreis 16 aufgeladen wird und durch Kopplung der Primärspule $L_P$ mit der Sekundärspule Ls eine Wechselspannung auf die Sekundärseite, d.h. die Ladevorrichtung 18, übertragen wird. Diese Wechselspannung wird in dem Gleichrichter 22 gleichgerichtet, anschließend mittels des Kondensators $C_{Bat}$ geglättet und bringt die zu ladende Batterie Bat auf Soll-Spannung, welche beispielsweise 400 V betragen kann. Die Anregungsfrequenz beträgt bevorzugt zwischen 50 kHz und 100 kHz. Das Übersetzungsverhältnis ü beträgt bevorzugt etwa 1:1. Bevor die vorliegende Erfindung weiter erläutert wird, soll zunächst auf die physikalischen Grundlagen näher eingegangen werden.

Als ein Beispiel für gedämpfte Schwingungen wird der in Fig. 2 dargestellte LRC-Schwingkreis betrachtet. Es ergibt sich folgende Maschenregel:

$$U_L+U_C+U_R=0=L*dI/dt+Q/C+RI=L*d^2Q/dt+R*dQ/dt+Q/C,$$

wobei Q die zwischen dem Kondensator C und der Spule L hin- und herwechselnde Energie bezeichnet und I den entsprechenden Strom.

Damit erhält man die Resonanzfrequenz des ungedämpften Systems zu:

$$\omega_0 = \frac{1}{\sqrt{LC}}.$$

Für den Abklingkoeffizienten β erhält man

$$\beta = \frac{R}{2L} \cdot$$

In dem dargestellten Schwingkreis wechselt die Energie zwischen $0{,}5*C*U^2$ (Energie im Kondensator C) und $0{,}5*L*I^2$ (Energie in der Spule). Die Widerstände im Stromkreis, d.h. der ohmsche Widerstand R sowie parasitäre Widerstände des Kondensators und der Spule sowie der Leitungen, sorgen für eine entsprechende Dämpfung.

Fig. 3 zeigt in diesem Zusammenhang den Verlauf der Spannung Uc über der Zeit t für den Fall $\omega_0 > \beta$. Die Eigenfrequenz $\omega_0$ ist somit größer als die Dämpfungskonstante $\beta$. Das System verhält sich dann in erster Näherung wie ein ungedämpfter Oszillator mit abfallender Amplitude. Die Lösung kann in diesem Bereich geschrieben werden als

$$U_C(t) = U_0 * e^{-\beta t} \cos(\omega_S t + \varphi),$$

wobei die Amplitude $U_0$ und die Phase $\varphi$ aus den Anfangsbedingungen zu bestimmen sind. Die Amplitude fällt somit exponentiell ab und die Schwingungsfrequenz ist niedriger, $\omega_S < \omega_0$.

Die Energie Etot(t) ist proportional zum Quadrat der Amplitude $U_0 e^{-\beta t}$; sie fällt somit mit der doppelten Rate ab:

$$E_{tot}(t) = E_{tot}(0) e^{-2\beta t}.$$

Aus den gemessenen Daten können die Parameter $\omega_S$ und ß bestimmt werden. $\omega_S$ erhält man aus der Periode T; der Abklingkoeffizient ß kann durch Vergleich der Amplitude zu verschiedenen Zeiten ermittelt werden. Vergleicht man die Auslenkungen bei zwei Zeiten, welche sich um eine Periode unterscheiden, fällt der oszillatorische Teil heraus und man erhält

$$U_C(t+T)/U_C(t) = e^{-\beta T},$$

d.h.

$$\beta = -ln\left[\frac{U_C(t+T)}{U_C(t)}\right]/T \cdot$$

Fig. 4 zeigt den zeitlichen Verlauf der Spannung Uc(t) in logarithmischer Darstellung. Ohne Störung ergibt sich demnach ein linearer Verlauf.

Zurück zu Fig. 1: Die Messvorrichtung 24 ist generell ausgelegt, in einem ersten Schritt die Anregung des Primärschwingkreises 16 zu unterbrechen und in einem zweiten Schritt den Primärschwingkreis 16 kurzzuschließen. In einer nicht beanspruchten Ausführung ist die Messvorrichtung 24 ausgelegt, zur Auswertung des zeitlichen Verlaufs der Spannungsamplitude $U_1$ des Primärschwingkreises 16 nach der Unterbrechung der Anregung und dem Kurzschließen des Primärschwingkreises 16 einen vorgebbaren Parameter zu ermitteln. Dabei kommen insbesondere die Amplitude der Spannung $U_1$ nach einer vorgebbaren Zeit und/oder die Zeitdauer, bis eine vorgebbare Amplitude der Spannung $U_1$ messbar ist, und/oder der Dämpfungsgrad zweier Spannungsamplituden, insbesondere das Amplitudenverhältnis zweier aufeinander folgender Schwingungen, in Betracht.

In einer nicht beanspruchten Ausführung ist die Messvorrichtung 24 weiter ausgelegt, den bei der Auswertung des zeitlichen Verlaufs der Spannungsamplitude $U_1$ des Primärschwingkreises 16 nach der Unterbrechung der Anregung des Primärschwingkreises 16 ermittelten Parameter gegen einen Referenzwert zu vergleichen und in Abhängigkeit des Vergleichs über eine Ausgabevorrichtung, beispielsweise eine Anzeigevorrichtung oder Lautsprecher, eine Information auszugeben, ob das induktive Laden freigegeben wird oder nicht. Dabei kann der Referenzwert den entsprechenden Parameter darstellen, der sich ohne Fremdkörper zwischen Primär- und Sekundärspule ergibt.

Ein Kurzschließen der Vollbrückenschaltung S1, S2, S3, S4 erfolgt insbesondere durch Leitendschalten der beiden tiefliegenden Schalter S1, S4 der Vollbrückenschaltung.

Die Messvorrichtung 26 ist ausgelegt, nach einer Unterbrechung der Anregung des Sekundärschwingkreises 20, beispielsweise ausgelöst durch drahtlose Übertragung eines entsprechenden Triggersignals an die Ladestation oder durch Detektion auf der Sekundärseite, den zeitlichen Verlauf der Spannungsamplitude $U_2$ des Sekundärschwingkreises 20 auszuwerten. In diesem Zusammenhang ist die Messvorrichtung ausgelegt, zu prüfen, ob der Gleichrichter 22 sperrt, wobei die Messvorrichtung 26 ausgelegt ist, den zeitlichen Verlauf der Amplitude der Spannung $U_2$ nur dann auszuwerten,

wenn der Gleichrichter 22 sperrt. Dies hat seine Ursache darin, dass für eine zuverlässige Auswertung der Spannung $U_2$ sichergestellt werden muss, dass keine Energie vom Sekundärschwingkreis 20 zur Batterie Bat abfließt. Dies kann dadurch erfolgen, dass bei der Anregung die Spannung des Primärschwingkreises 16 - bei ü=1 - lediglich auf einige Volt unter der gleichgerichteten Sekundärgleichspannung $U_{Bat}$ reduziert wird. Alternativ kann der Primärschwingkreis 16 für kurze Zeit auf seine Soll-Spannung angefacht werden und danach sogleich über die Vollbrückenschaltung 16 kurzgeschlossen werden. Es wird sich dann nach schnellem Abklingen auf eine Spannung unterhalb der Batteriespannung $U_{Bat}$ ebenfalls eine abklingende Schwingung einstellen, bei der sekundärseitig keine Last mehr anliegt, da der Ladestrom für die Batterie Bat immer nur vom höheren zum niedrigeren Potential fließt und bei gleichem Niveau die Gleichrichterdioden D1 bis D4 des Gleichrichters sperren.

Bei beiden Varianten wird sekundärseitig ein als "open load" bezeichneter Zustand eingestellt. In diesem Zustand sind Abweichungen zwischen tatsächlich gemessenem Parameter und Referenzwert alleine auf einen gegebenenfalls zwischen Primär- und Sekundärspule angeordneten Fremdkörper zurückzuführen.

Beim Anfachen der primärseitigen Schwingung wird die Vollbrückenschaltung eine vorgebbare Anzahl-mal durchgeschaltet, beispielsweise drei- bis zehnmal, sodass sich hier eine aufschwingende Schwingung einstellt. Es muss nicht bis zur Nennspannung angefacht werden. Durch eine derartig kurzzeitige Schwingung entstehen auch bei Vorhandensein eines Fremdkörpers zwischen Primär- und Sekundärspule noch keine Schäden.

Ist die Dämpfung - bestimmt durch den ohmschen Widerstand R und Wirkungsgradverluste - im Primärschwingkreis 16 nicht durch sich im Magnetfeld zwischen Primärspule $L_P$ und Sekundärspule Ls befindende Fremdkörper beeinflusst, so stellt sich ein Verhältnis zweier aufeinander folgender Amplituden von $U_1(t+T)/U_1(t)=e^{-ßT}$ ein, welches als Referenzwert der abklingenden Schwingung abgespeichert wird, wobei T die Periodendauer und ß=R/2L der Abklingkoeffizient der Schwingung ist. Entsprechendes gilt bei einer sekundärseitigen Auswertung.

Befindet sich hingegen ein ferritischer Fremdkörper, d.h. ein metallischer Fremdkörper oder ein elektrisch leitfähiger Gegenstand, im schnell wechselnden Magnetfeld zwischen Primärspule $L_P$ und Sekundärspule Ls, der durch Wirbelstromverluste Energie aufnimmt, so werden die aufeinander folgenden Amplituden schneller gedämpft. Dies ist durch den Energieverlust im Schwingkreis bedingt und wird sich proportional zu den dort entstehenden Wirbelstromverlusten in Form von Abwärme einstellen.

Somit kann über den Vergleich des aktuell gemessenen Dämpfungsgrads mit dem zuvor ermittelten Referenzwert festgestellt werden, um wieviel sich der Energieverlust im Schwingkreis erhöht hat, welcher sich dort beispielsweise in Form von Wirbelstromverlusten als Abwärme zwischen der Ladestation und der Ladevorrichtung ausbildet, beispielsweise bedingt durch einen Fremdkörper. Die Ladestation 12 schaltet diesen Prüfzyklus bevorzugt dem eigentlichen Ladevorgang voran und kann bei über einem vorgebbaren Schwellwert liegenden Energieverlusten eine Warnung ausgeben und/oder den Ladevorgang unterbinden.

Ein Schütz zur Trennung der Last Bat im Sekundärschwingkreis ist nicht erforderlich, da durch die niedrige induzierte Spannung die Gleichrichterdioden D1 bis D4 für den oben erwähnten Zustand der "open load" sorgen und somit keine Energie sekundärseitig aus dem Magnetfeld abgezogen wird, welche die Messung der Amplitudendämpfung beeinflussen würde.

Mit der vorliegenden Erfindung lassen sich auch primäre sowie sekundäre Windungskurzschlüsse der Spulen $L_P$ und Ls diagnostizieren, da kurzgeschlossene Windungen magnetische Energie aufnehmen, gegeninduzieren und somit die ermittelten Verläufe der Spannungen $U_1$ und $U_2$ ebenfalls stärker als bei Referenzbedingungen dämpfen würden.

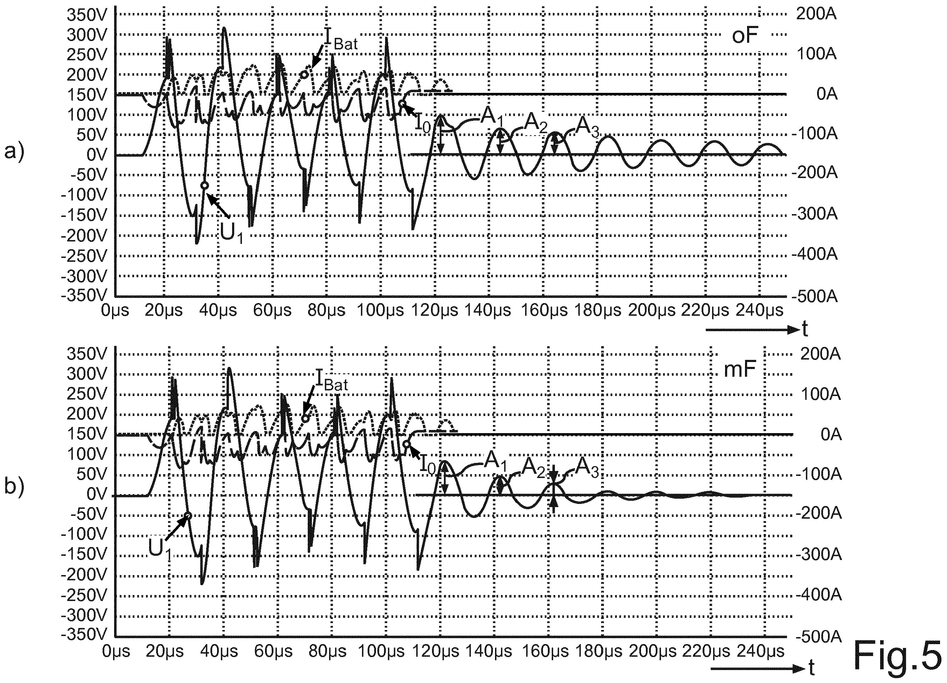

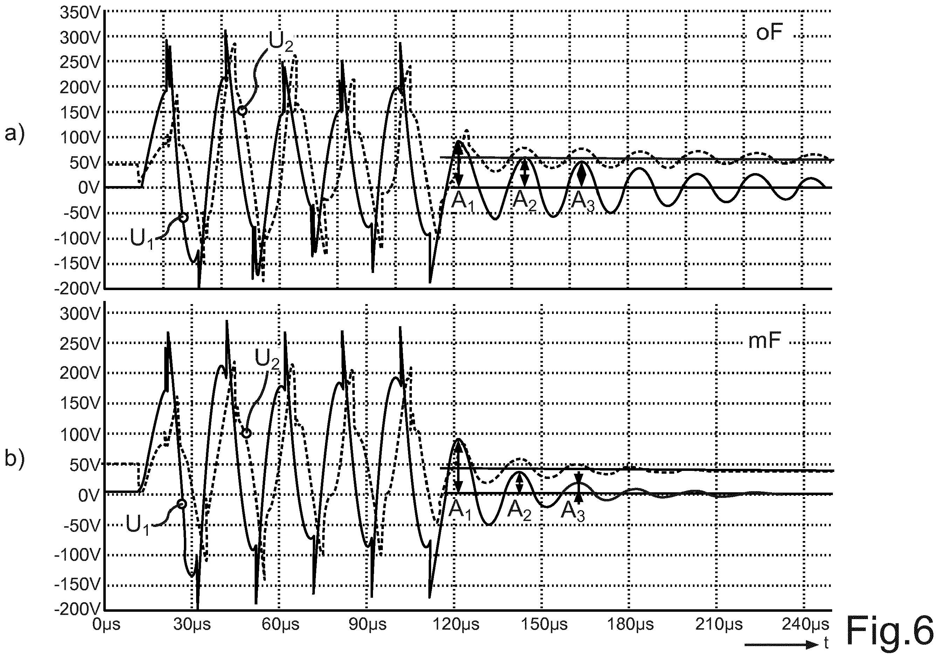

Fig. 5 und 6 zeigen zeitliche Verläufe diverser Größen des in Fig. 1 dargestellten Systems zum induktiven Laden, wobei $U_0$ zu 100 V gewählt wurde und die Schalter S1 bis S4 der Vollbrückenschaltung durch MOSFETs realisiert wurden. Die Anregungsfrequenz der Schalter S1 bis S4 betrug 50 kHz. Die in Fig. 5a bzw. 6a dargestellten zeitlichen Verläufe wurden ohne Fremdkörper zwischen Primärspule $L_P$ und Sekundärspule Ls gemessen, während die in Fig. 5b und 6b dargestellten zeitlichen Verläufe mit einem Fremdkörper zwischen den genannten Spulen ermittelt wurden.

Für die Darstellung von Fig. 5 wurde der Primärschwingkreis bis 110 μs angeregt, wie sich aus dem Verlauf von $I_0$ ergibt. Der Verlauf der Spannung $U_1$ spiegelt dies ebenfalls wider. Nach dem Unterbrechen der Anregung und Kurzschließen des Primärschwingkreises 16 fließt noch so lange ein Strom $I_{Bat}$ zur Batterie Bat des Kraftfahrzeugs 14, bis die sekundärseitige Spannung so weit abgesunken ist, dass der Gleichrichter 22 sperrt. In Fig. 5a können aus dem Verlauf der Spannung $U_1$ nach dem Unterbrechen und Kurzschließen des Primärschwingkreises 16 Referenzwerte für den Zustand, dass sich kein Fremdkörper zwischen Primär- und Sekundärspule befindet, entnommen werden, beispielsweise das Verhältnis zweier aufeinander folgender Schwingungen A2/A1 A3/A1 oder A3/A2 oder dergleichen, oder die Zeit, die vergeht, bis sich eine bestimmte vorgebbare Spannungsamplitude einstellt, oder die Amplitude der Spannung $U_1$ nach einer festen oder variablen Zeitdauer.

Fig. 5b zeigt die entsprechenden Kurvenverläufe für den Fall, dass sich ein Fremdkörper zwischen Primär- und Sekundärspule befindet. Wie deutlich zu erkennen ist, ist das Verhältnis der aufeinander folgenden Amplituden A2/A1, A3/A1 oder A3/A2 deutlich niedriger als in dem Fall von Fig. 5a. Auch ist die Zeitdauer, bis zu der sich eine bestimmte Spannung einstellt, deutlich kürzer als in Fig. 5a. Entsprechend kann zu einer festen oder variablen Zeit eine kleinere Amplitude gemessen werden (betragsmäßig) als im Falle ohne Fremdkörper.

In Fig. 6 sind die entsprechenden zeitlichen Verläufe sowohl für die Spannung $U_1$ als auch für die Spannung $U_2$ dargestellt. Um die zeitlichen Verläufe der übersichtlicheren Darstellung voneinander zu trennen, wurde der Verlauf der Spannung $U_2$ um +50V verschoben. Im Ergebnis kann festgestellt werden, dass auch aus dem Verlauf der Amplitude der Spannung $U_2$ auf der Sekundärseite zuverlässig auf das Vorhandensein eines Fremdkörpers zwischen Primär- und Sekundärspule geschlossen werden kann.

**Patentansprüche**

1. Kraftfahrzeug (14) mit einer Ladevorrichtung (18) zum induktiven Laden

   einer Batterie des Kraftfahrzeugs (14) mittels einer Ladestation (12), wobei die Ladevorrichtung (18) einen Sekundärschwingkreis (20) mit einem Sekundärkondensator ($C_S$) und einer Sekundärspule (Ls) aufweist, wobei zwischen den Sekundärschwingkreis (20) und die Batterie des Kraftfahrzeugs (14) ein Gleichrichter (22) geschaltet ist, wobei das Laden der Batterie (Bat) derart erfolgt, dass ein Primärschwingkreis (16) der Ladestation (12) aufgeladen wird und durch Kopplung einer Primärspule (Lp) mit der Sekundärspule (Ls) eine Wechselspannung auf die Sekundärseite übertragen wird,
   wobei die Ladevorrichtung (18) weiterhin eine Messvorrichtung (26) umfasst, die ausgelegt ist, nach einer Unterbrechung der Anregung des Sekundärschwingkreises (20) durch den Primärschwingkreis (16) den zeitlichen Verlauf der Spannungsamplitude des Sekundärschwingkreises (20) auszuwerten zur Detektion eines ferritischen Gegenstands zwischen der Primärspule ($L_P$) und der Sekundärspule ($L_S$),
   **dadurch gekennzeichnet, dass**
   die Messvorrichtung (26) ausgelegt ist zu prüfen, ob der Gleichrichter (22) sperrt, wobei die Messvorrichtung (26) weiterhin ausgelegt ist, den zeitlichen Verlauf der Spannungsamplitude des Sekundärschwingkreises (20) nur dann auszuwerten, wenn der Gleichrichter (22) sperrt.

2. System (10) zum induktiven Laden umfassend eine Ladestation (12) und ein Kraftfahrzeug (14) nach Anspruch 1, wobei die Ladestation (12) ausgelegt ist zum induktiven Laden einer Batterie eines Kraftfahrzeugs (14) mit einem Primärschwingkreis (16) zum Erzeugen einer elektrischen Schwingung, wobei der Primärschwingkreis (16) einen Primärkondensator ($C_P$) und eine Primärspule (Lp) aufweist,
   wobei die Ladestation (12) weiterhin eine Messvorrichtung (24) umfasst, die ausgelegt ist,

   - den Primärschwingkreis (16) bis zu einer vorgebbaren Spannungsamplitude anzuregen, und
   - anschließend die Anregung des Primärschwingkreises (16) zu unterbrechen.

3. System nach Anspruch 2,
   **dadurch gekennzeichnet, dass**
   die Messvorrichtung (24) der Ladestation (12) ausgelegt ist, in einem ersten Schritt die Anregung des Primärschwingkreises (16) zu unterbrechen und in einem zweiten Schritt den Primärschwingkreis (16) kurzzuschließen.

4. System nach Anspruch 3,
   **dadurch gekennzeichnet, dass**
   die Messvorrichtung (26) der Ladevorrichtung (18) des Kraftfahrzeugs (14) ausgelegt ist, zur Auswertung des zeitlichen Verlaufs der Spannungsamplitude des Sekundärschwingkreises (20) nach der Unterbrechung der Anregung und dem Kurzschließen des Primärschwingkreises (16) einen vorgebbaren Parameter zu ermitteln, insbesondere

   - die Spannungsamplitude nach einer vorgebbaren Zeit, und/oder
   - die Zeitdauer, bis eine vorgebbare Spannungsamplitude messbar ist, und/oder
   - den Dämpfungsgrad der Spannungsamplituden (A1, A2; A2, A3), insbesondere das Amplitudenverhältnis zweier aufeinander folgender Schwingungen.

5. System nach einem der Ansprüche 2 bis 4,
   **dadurch gekennzeichnet, dass**
   die Messvorrichtung (24) der Ladestation (12) mit einem Anschluss zwischen dem Primärkondensator ($C_P$) und der Primärspule ($L_P$) gekoppelt ist, insbesondere über einen Shunt-Widerstand ($R_{Sh1}$) oder einen Spannungsteiler.

**6.** System nach einem der Ansprüche 2 bis 5,
**dadurch gekennzeichnet, dass**
der Primärschwingkreis (16) als Vollbrückenschaltung (S1, S2, S3, S4) ausgebildet ist, wobei die Messvorrichtung (24) der Ladestation (12) ausgelegt ist, die Anregung des Primärschwingkreises (16) zu unterbrechen und die Vollbrückenschaltung (S1, S2, S3, S4) kurzzuschließen, insbesondere durch Leitendschalten der beiden tiefliegenden Schalter (S1, S4) der Vollbrückenschaltung (S1, S2, S3, S4).

**7.** Verfahren zum induktiven Laden einer Batterie eines Kraftfahrzeugs (14) nach Anspruch 1
mittels einer Ladestation (12), die einen Primärschwingkreis (16) mit einem Primärkondensator ($C_P$) und einer Primärspule (Lp) zum Erzeugen einer elektrischen Schwingung aufweist, **gekennzeichnet durch** folgende Schritte:

a) Anregen des Primärschwingkreises (16) bis zu einer vorgebbaren Spannungsamplitude,
b) Unterbrechen der Anregung des Primärschwingkreises (16), und
c) Auswerten des zeitlichen Verlaufs einer nach Unterbrechung des Primärschwingkreises (16) abklingenden Spannungsamplitude des Sekundärschwingkreises (20) zur Detektion eines ferritischen Gegenstands zwischen der Primärspule ($L_P$) und der Sekundärspule ($L_S$), nachdem verifiziert wurde, dass die Spannungsamplitude des Sekundärschwingkreises (20) auf einen Wert gefallen ist, so dass der Gleichrichter (22) sperrt, wobei der Schritt c) durch die Messvorrichtung (26) der Ladevorrichtung (18) des Kraftfahrzeugs (14) ausgeführt wird.

**8.** Verfahren nach Anspruch 7,
**dadurch gekennzeichnet, dass**
in Schritt a) die vorgebbare Spannungsamplitude derart bemessen wird, dass der Gleichrichter (22) des Kraftfahrzeugs (14) sperrt.

**9.** Verfahren nach Anspruch 7,
**dadurch gekennzeichnet, dass**
in Schritt a) der Primärschwingkreis (16) auf seine Soll-Spannung angeregt wird.

## Claims

**1.** Motor vehicle (14) having a charging device (18) for inductively charging a battery of a motor vehicle (14) by means of a charging station (12),

wherein the charging device (18) has a secondary resonant circuit (20) having a secondary capacitor ($C_s$) and a secondary coil ($L_s$), wherein a rectifier (22) is connected between the secondary resonant circuit (20) and the battery of the motor vehicle (14), wherein the battery (Bat) is charged in such a way that a primary resonant circuit (16) of the charging station (12) is charged and an AC voltage is transmitted to the secondary side by coupling a primary coil ($L_p$) to the secondary coil ($L_s$),
wherein the charging device (18) further comprises a measuring device (26) designed to evaluate the time profile of the voltage amplitude of the secondary resonant circuit (20) after an interruption of the excitation of the secondary resonant circuit (20) by the primary resonant circuit (16) in order detect a ferritic object between the primary coil ($L_P$) and the secondary coil ($L_s$),
**characterised in that**
the measuring device (26) is designed to check whether the rectifier (22) is blocking, wherein the measuring device (26) is further designed to evaluate the time profile of the voltage amplitude of the secondary resonant circuit (20) only when the rectifier (22) is blocking.

**2.** System (10) for inductive charging, comprising a charging station (12) and a motor vehicle (14) according to claim 1, wherein the charging station (12) is designed to inductively charge a battery of a motor vehicle (14) having a primary resonant circuit (16) for generating an electrical oscillation, wherein the primary resonant circuit (16) has a primary capacitor ($C_P$) and a primary coil ($L_p$),
wherein the charging station (12) further comprises a measuring device (24) designed to

- excite the primary resonant circuit (16) up to a predefinable voltage amplitude, and
- then to interrupt the excitation of the primary resonant circuit (16).

**3.** System according to claim 2,

**characterised in that**
the measuring device (24) of the charging station (12) is designed to interrupt the excitation of the primary resonant circuit (16) in a first step and to short-circuit the primary resonant circuit (16) in a second step.

4. System according to claim 3,
**characterised in that**
the measuring device (26) of the charging device (18) of the motor vehicle (14) is designed to determine a predefinable parameter in order to evaluate the time profile of the voltage amplitude of the secondary resonant circuit (20) after the excitation has been interrupted and the primary resonant circuit (16) has been short-circuited, in particular

   - the voltage amplitude after a predefinable time, and/or
   - the length of time until a predefinable voltage amplitude is measurable, and/or
   - the damping ratio of the voltage amplitudes (A1, A2; A2, A3), in particular the amplitude ratio of two successive oscillations.

5. System according to any of claims 2 to 4,
**characterised in that**
the measuring device (24) of the charging station (12) is coupled to a connection between the primary capacitor ($C_P$) and the primary coil ($L_p$), in particular across a shunt resistor (Rsh1) or a voltage divider.

6. System according to any of claims 2 to 5,
**characterised in that**
the primary resonant circuit (16) is in the form of a full-bridge circuit (S1, S2, S3, S4), wherein the measuring device (24) of the charging station (12) is designed to interrupt the excitation of the primary resonant circuit (16) and to short-circuit the full-bridge circuit (S1, S2, S3, S4), in particular by switching the two low-lying switches (S1, S4) of the full-bridge circuit (S1, S2, S3, S4) to become conductive.

7. Method for inductively charging a battery of a motor vehicle (14) according to claim 1 by means of a charging station (12) having a primary resonant circuit (16) with a primary capacitor ($C_P$) and a primary coil ($L_P$) for generating an electrical oscillation,
**characterised by** the following steps:

   a) exciting the primary resonant circuit (16) up to a predefinable voltage amplitude,
   b) interrupting the excitation of the primary resonant circuit (16), and
   c) evaluating the time profile of a voltage amplitude of the secondary resonant circuit (20) decaying after interruption of the primary resonant circuit (16) in order to detect a ferritic object between the primary coil ($L_P$) and the secondary coil ($L_s$), after it has been verified that the voltage amplitude of the secondary resonant circuit (20) has fallen to a value such that the rectifier (22) is blocking, wherein step c) is carried out by the measuring device (26) of the charging device (18) of the motor vehicle (14).

8. Method according to claim 7,
**characterised in that**
in step a), the predefinable voltage amplitude is dimensioned in such a way that the rectifier (22) of the motor vehicle (14) is blocking.

9. Method according to claim 7,
**characterised in that**
in step a) the primary resonant circuit (16) is excited to its rated voltage.

**Revendications**

1. Véhicule automobile (14) avec un dispositif de charge (18) permettant une charge par induction d'une batterie du véhicule automobile (14) au moyen d'une station de charge (12),

   dans lequel le dispositif de charge (18) présente un circuit oscillant secondaire (20) avec un condensateur secondaire ($C_S$) et une bobine secondaire ($L_s$), dans lequel un redresseur (22) est monté entre le circuit oscillant secondaire (20) et la batterie du véhicule automobile (14), dans lequel la charge de la batterie (Bat) intervient de telle manière qu'un circuit oscillant primaire (16) de la station de charge (12) est chargé et une tension alternative est transmise au côté secondaire par couplage d'une bobine primaire ($L_p$) avec la bobine secondaire ($L_s$),

dans lequel le dispositif de charge (18) comprend en outre un dispositif de mesure (26) conçu pour, après une interruption de l'excitation du circuit oscillant secondaire (20) par le circuit oscillant primaire (16), évaluer l'évolution temporelle de l'amplitude de tension du circuit oscillant secondaire (20) afin de détecter un objet ferritique entre la bobine primaire ($L_P$) et la bobine secondaire ($L_s$),

**caractérisé en ce que**

le dispositif de mesure (26) est conçu pour vérifier si le redresseur (22) se bloque, dans lequel le dispositif de mesure (26) est en outre conçu pour évaluer l'évolution temporelle de l'amplitude de tension du circuit oscillant secondaire (20) uniquement lorsque le redresseur (22) se bloque.

**2.** Système (10) permettant une charge par induction, comprenant une station de charge (12) et un véhicule automobile (14) selon la revendication 1, dans lequel la station de charge (12) est conçue pour charger par induction une batterie d'un véhicule automobile (14) avec un circuit oscillant primaire (16) permettant de générer une oscillation électrique, dans lequel le circuit oscillant primaire (16) présente un condensateur primaire ($C_P$) et une bobine primaire ($L_p$), dans lequel la station de charge (12) comprend en outre un dispositif de mesure (24) conçu pour :

- exciter le circuit oscillant primaire (16) jusqu'à une amplitude de tension pouvant être prédéfinie, et
- interrompre ensuite l'excitation du circuit oscillant primaire (16).

**3.** Système selon la revendication 2,

**caractérisé en ce que**

le dispositif de mesure (24) de la station de charge (12) est conçu pour, dans un premier temps, interrompre l'excitation du circuit oscillant primaire (16) et pour, dans un second temps, court-circuiter le circuit oscillant primaire (16).

**4.** Système selon la revendication 3,

**caractérisé en ce que**

le dispositif de mesure (26) du dispositif de charge (18) du véhicule automobile (14) est conçu pour déterminer un paramètre pouvant être prédéfini, afin d'évaluer l'évolution temporelle de l'amplitude de tension du circuit oscillant secondaire (20) après l'interruption de l'excitation et le court-circuit du circuit oscillant primaire (16), en particulier

- l'amplitude de tension après un temps pouvant être prédéfini, et/ou
- la durée s'écoulant jusqu'à ce qu'une amplitude de tension pouvant être prédéfinie puisse être mesurée, et/ou
- le degré d'atténuation des amplitudes de tension (A1, A2 ; A2, A3), en particulier le rapport d'amplitude de deux oscillations successives.

**5.** Système selon l'une quelconque des revendications 2 à 4,

**caractérisé en ce que**

le dispositif de mesure (24) de la station de charge (12) est couplé à un raccordement entre le condensateur primaire ($C_P$) et la bobine primaire ($L_p$), en particulier par l'intermédiaire d'une résistance shunt (Rsh1) ou d'un diviseur de tension.

**6.** Système selon l'une quelconque des revendications 2 à 5,

**caractérisé en ce que**

le circuit oscillant primaire (16) est réalisé sous la forme d'un montage en pont (S1, S2, S3, S4), dans lequel le dispositif de mesure (24) de la station de charge (12) est conçu pour interrompre l'excitation du circuit oscillant primaire (16) et court-circuiter le montage en pont (S1, S2, S3, S4), en particulier par passage à l'état conducteur des deux commutateurs (S1, S4) du montage en pont (S1, S2, S3, S4) situés vers le bas.

**7.** Procédé de charge par induction d'une batterie d'un véhicule automobile (14) selon la revendication 1 au moyen d'une station de charge (12) présentant un circuit oscillant primaire (16) avec un condensateur primaire ($C_P$) et une bobine primaire ($L_P$) permettant de générer une oscillation électrique,

**caractérisé par** les étapes ci-dessous consistant à :

a) exciter le circuit oscillant primaire (16) jusqu'à une amplitude de tension pouvant être prédéfinie ;
b) interrompre l'excitation du circuit oscillant primaire (16) ; et

c) évaluer l'évolution temporelle d'une amplitude de tension du circuit oscillant secondaire (20) qui diminue après l'interruption du circuit oscillant primaire (16), afin de détecter un objet ferritique entre la bobine primaire ($L_P$) et la bobine secondaire ($L_s$), après vérification que l'amplitude de tension du circuit oscillant secondaire (20) est descendue à une valeur telle que le redresseur (22) se bloque, dans lequel l'étape c) est mise en œuvre grâce au dispositif de mesure (26) du dispositif de charge (18) du véhicule automobile (14).

8. Procédé selon la revendication 7,
   **caractérisé en ce que**
   dans l'étape a), l'amplitude de tension pouvant être prédéfinie est dimensionnée de telle manière que le redresseur (22) du véhicule automobile (14) se bloque.

9. Procédé selon la revendication 7,
   **caractérisé en ce que**
   dans l'étape a), le circuit oscillant primaire (16) est excité à sa tension de consigne.

Fig.1

Fig.2

Fig.3

Fig.4

Fig.5

EP 3 509 894 B1

Fig.6

EP 3 509 894 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014207253 A1
- DE 102014223623 A1
- EP 2891575 A1
- DE 102011050655 A1
- DE 102012218194 A1
- US 20160218567 A1